# EUROPEAN PATENT SPECIFICATION

(11) **EP 4 205 999 B1**
(45) Date of publication and mention of the grant of the patent: **29.04.2026**
(21) Application number: 22818600.3
(22) Date of filing: 09.11.2022
(51) Int. Cl.: B60C 15/06, B60C 15/05, B29D 30/48, B60C 15/04, B60C 1/00, B29D 30/72

(54) **PNEUMATIC TIRE**
LUFTREIFEN
PNEUMATIQUE

(30) Priority: 09.11.2021 KR 20210152831
(43) Date of publication of application: 05.07.2023
(73) Proprietor: Kumho Tire Co., Inc., Gwangju 62392 (KR)
(72) Inventor: KIM, Jin Young, Yongin-si, Gyeonggi-do 16909 (KR)
(74) Representative: RGTH
(86) International application number: PCT/KR2022/017593
(87) International publication number: WO 2023/085786

(56) References cited:
- JP-A- 2007 238 078
- JP-A- 2018 127 022
- JP-A- 2020 090 127
- JP-B2- 6 285 751
- KR-B1- 100 577 589
- KR-B1- 100 679 875
- KR-B1- 101 654 942
- KR-B1- 101 723 745
- US-A- 4 508 153
- US-A1- 2020 023 690

## Description

### BACKGROUND OF THE INVENTION

### 1. Field of the Invention

The present invention relates to a pneumatic tire, and more specifically to a pneumatic tire that avoids a change in the physical properties of a flange rubber, ozone cracks caused by ozone present in the air, and fatigue cracks caused by frequent flexion and extension to achieve improved handling stability and straight ahead ability.

### 2. Description of the Related Art

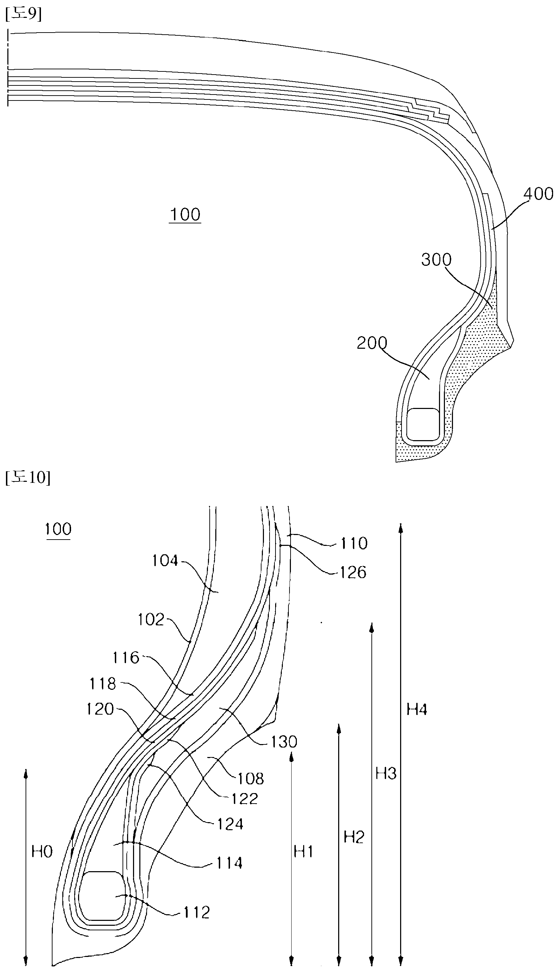

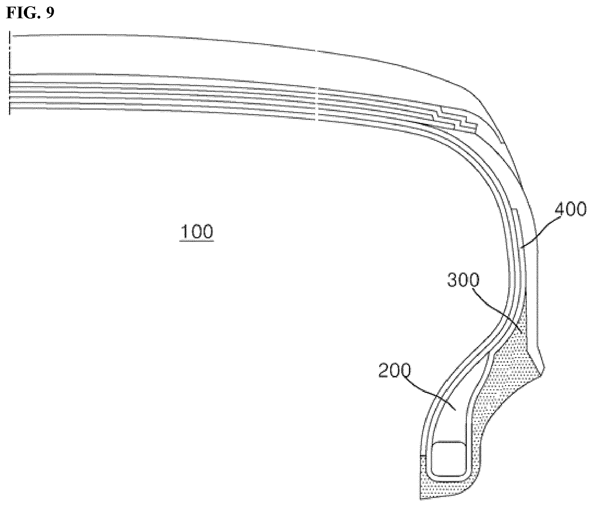

In a general tire, a single rubber rim flange (denoted by numeral 300 in FIG. 9) constitutes the exterior (*i.e.* the portion opposite a vehicle wheel) of a bead portion (denoted by numeral 200 in FIG. 9) in contact with the vehicle wheel and transfers the rotating and steering forces of the vehicle wheel to the tread.

This design has a limitation in improving the steering ability of the vehicle wheel due to the limited design of the rim flange in terms of hardness.

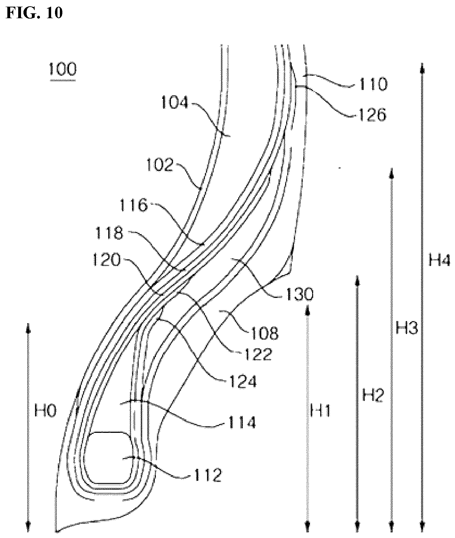

For example, when a self support reinforce (SSR) type in which a rubber insert is added to a sidewall (denoted by numeral 110 in FIG. 10) of a tire to support the sidewall is compared with a support ring (SR) type in which a rim has an additional structure, the role of the rubber insert in supporting the sidewall upon release of air from the tire of SSR type is of great significance but the weight proportion of the rubber insert is also high because the rubber insert is the second largest in volume after the tread.

However, since the sidewall is supported by the force of the rubber insert itself, its volume cannot be reduced and thus the weights of the other portions need to be reduced. Insufficient stiffness of the bead portion causes detachment of the bead portion from the rim, leading to the formation of defects.

An approach to solving these problems can be found in Korean Patent No. 1573870. This patent discloses a tire having two carcasses 116 and 118 to reduce the volume and weight of a bead portion while maintaining the stiffness of the bead portion, as illustrated in FIG. 10. Specifically, the tire includes an inner liner 102, a sidewall 110, a bead portion consisting of a bead 112 and an apex 114, a tread portion (not illustrated), and a belt portion (not illustrated) wherein the height H0 of the apex 114 is located at a position corresponding to 15-20% of the sectional height SH of the tire, the bead 112 and the apex 114 are surrounded by a flipper 120 through which the adhesion between the bead portion and the carcasses 116 and 118 reinforcing the bead portion is improved, a turned-up end 122 of the flipper 120 surrounds the bead 112 and the apex 114 and then comes into contact with the flipper 120, the height H2 of the turned-up end 122 of the flipper 120 is smaller than the height H3 of the starting position of the flipper 120, that is, the height H2 of the turned-up end 122 is located at a position corresponding to 20-25% of the sectional height SH of the tire, the height H3 of the starting position of the flipper 120 is located at a position corresponding to 25-30% of the sectional height SH of the tire, the two carcass 116 and 118 are in contact with the exterior of the rubber insert 104 in the width direction of the tire and are turned up outwardly from the flipper 120 surrounding the bead 112 and the apex 114, and the second carcass 118 is turned up such that the height H1 of the turned-up end 124 of the second carcass 118 is smaller than the height H2 of the turned-up end 122 of the flipper, that is, the height H1 of the turned-up end 124 of the second carcass is located at a position corresponding to 15-20% of the sectional height SH of the tire. Although this design can help reduce the volume or weight of the tire, heat transferred from a braking disk caused by frequent braking of the vehicle, which actually occurs in the tire, causes a change in the physical properties of a flange rubber, ozone cracks are caused by ozone present in the air, and fatigue cracks are caused by frequent flexion and extension.

Further, JP 2007 238078 A, JP 6 285751 B2, JP 2020 090127 A, US 2020/023690 A1 and JP 2018 127022 A disclose a pneumatic tire. However, a pneumatic tire as claimed in Claim 1 of the present invention is not disclosed.

### SUMMARY OF THE INVENTION

Therefore, one object of the present invention is to provide a pneumatic tire that has improved handling stability and straight ahead ability while avoiding a change in the physical properties of a flange rubber, ozone cracks caused by ozone present in the air, and fatigue cracks caused by frequent flexion and extension.

One aspect of the present invention provides a pneumatic tire including a bead portion and a rim flange provided outside the bead portion wherein the rim flange is made of a rubber resistant to ozone and fatigue and a hardness reinforcing rubber portion is interposed between the rim flange and the bead portion.

According to the present invention, the hardness of the hardness reinforcing rubber portion is higher than that of the rim flange.

According to the present invention, the width of the hardness reinforcing rubber portion in contact with a body ply surrounding the bead portion is at least 5 mm at the end of an apex of the bead portion.

As described above, the pneumatic tire of the present invention has improved handling stability and straight ahead ability while avoiding a change in the physical properties of the flange rubber, ozone cracks caused by ozone present in the air, and fatigue cracks caused by frequent flexion and extension.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a half cross-sectional view illustrating a right upper portion of a tire according to the present invention;
FIG. 2 is an enlarged view illustrating the bead portion of FIG. 1 and its periphery to show the widths of the rim flange and the hardness reinforcing rubber portion;
FIG. 3 is an enlarged view illustrating the bead portion of FIG. 1 and its periphery to show the distance to the end of the rim flange and the distance to the end of the hardness reinforcing rubber portion;
FIG. 4 is an enlarged view illustrating the bead portion of FIG. 1 and its periphery to show the thicknesses of the rim flange and the hardness reinforcing rubber portion;
FIG. 5 is a diagram showing the relationship between the slip angle of a tire according to the present invention and centrifugal and centripetal forces;
FIG. 6 is a graph showing the results of a force and moment test on tires manufactured in Example 1 and Comparative Example 1;
FIG. 7 is a graph showing the results of evaluation of straight ahead ability, steering ability, and stability of tires manufactured in Example 1 and Comparative Example 1;
FIG. 8 is a graph showing the relationship between the widths of hardness reinforcing rubber portions and rim flanges of tires manufactured in Example 1 and Comparative Example 1;
FIG. 9 is a half cross-sectional view illustrating a right upper portion of a conventional tire; and
FIG. 10 is an enlarged cross-sectional view illustrating a bead portion of a conventional tire and its periphery.

### DETAILED DESCRIPTION OF THE INVENTION

The present invention will now be described in more detail.

Technical terms used in this specification are used to merely illustrate specific embodiments. As far as not being defined differently, all terms used herein including technical or scientific terms may have the same meaning as those generally understood by an ordinary person skilled in the art to which the present invention belongs to, and should not be construed in an excessively comprehensive meaning or an excessively restricted meaning.

In addition, if a technical term used in the description of the present invention is an erroneous term that fails to clearly express the idea of the present invention, it should be replaced by a technical term that can be properly understood by the skilled person in the art. In addition, general terms used in the description of the present invention should be construed according to definitions in dictionaries or according to its front or rear context, and should not be construed to have an excessively restrained meaning.

A singular representation may include a plural representation as far as it represents a definitely different meaning from the context. Terms "consists of" or "include" used herein should be understood that they are intended to indicate an existence of several components or several steps, disclosed in the specification, and it may also be understood that part of the components or steps may not be included or additional components or steps may further be included.

Hereinafter, preferred embodiments of the present invention will be described in detail with reference to the accompanying drawings. The same or similar components are denoted by the same reference numerals regardless of the figure number, and redundant explanations are omitted.

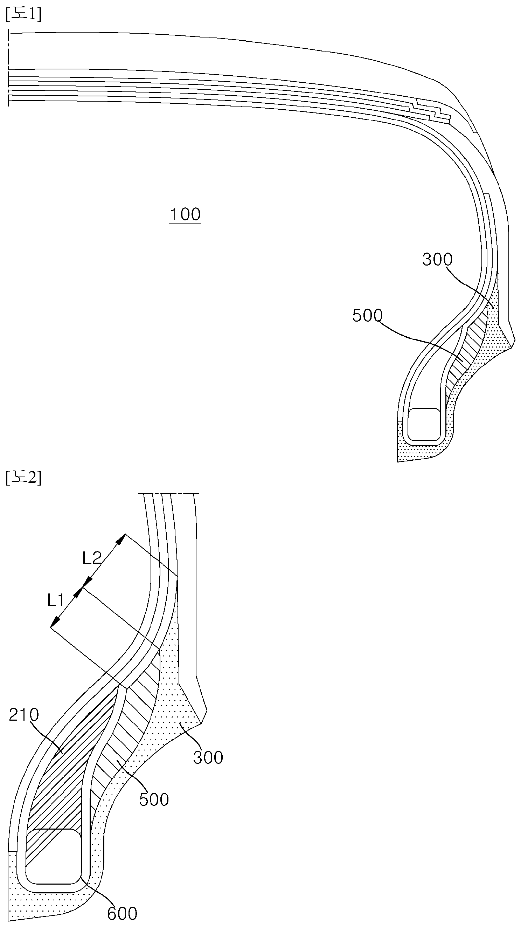

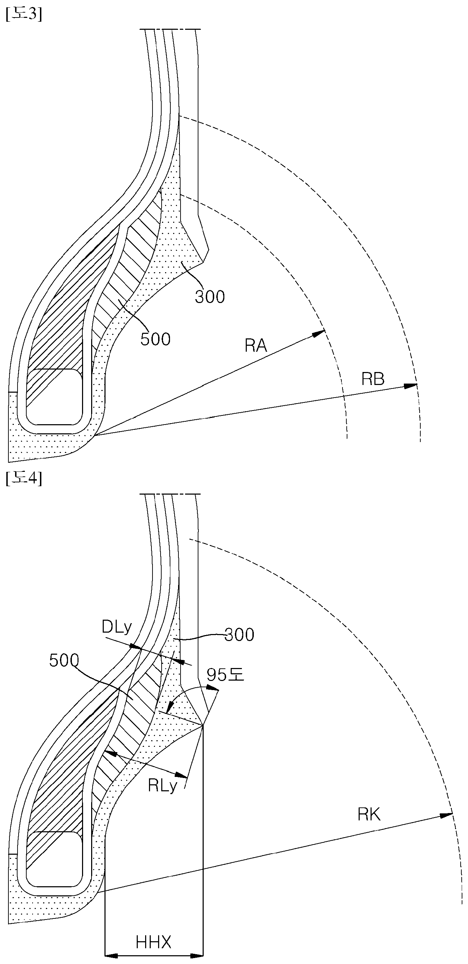

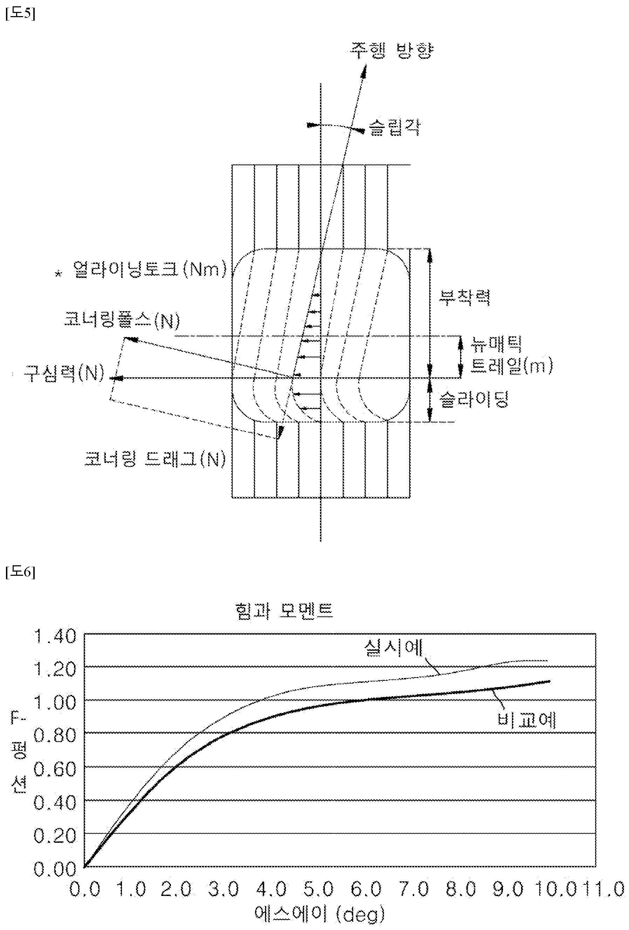

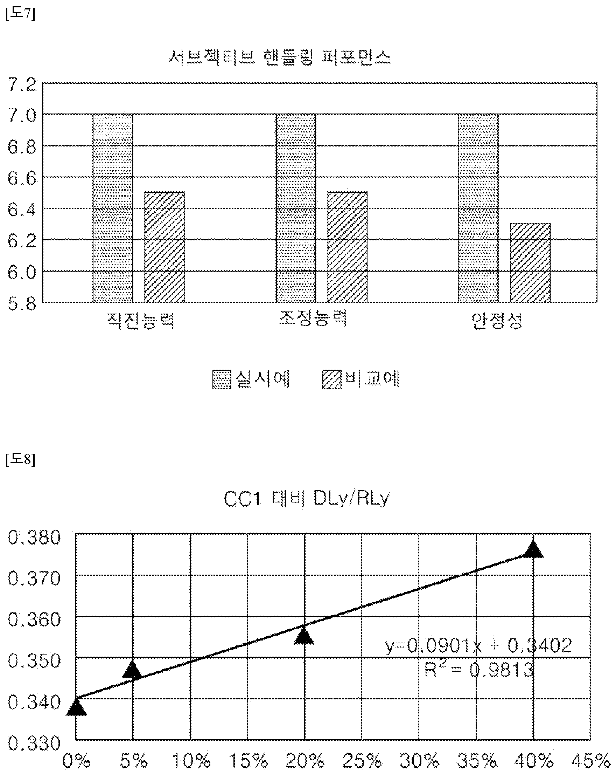

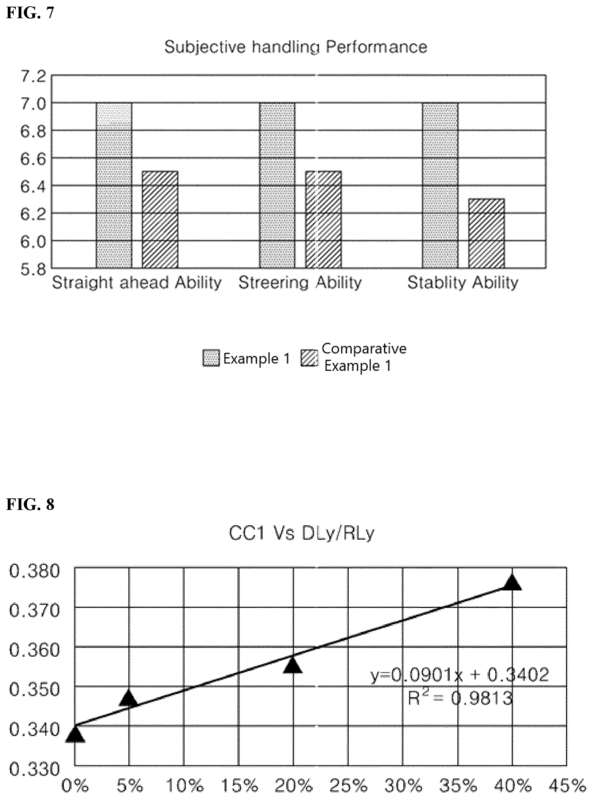

FIG. 1 is a half cross-sectional view illustrating a right upper portion of a tire according to the present invention, FIG. 2 is an enlarged view illustrating the bead portion of FIG. 1 and its periphery to show the widths of the rim flange and the hardness reinforcing rubber portion, FIG. 3 is an enlarged view illustrating the bead portion of FIG. 1 and its periphery to show the distance to the end of the rim flange and the distance to the end of the hardness reinforcing rubber portion, FIG. 4 is an enlarged view illustrating the bead portion of FIG. 1 and its periphery to show the thicknesses of the rim flange and the hardness reinforcing rubber portion, FIG. 5 is a diagram showing the relationship between the slip angle of the tire according to the present invention and centrifugal and centripetal forces, FIG. 6 is a graph showing the results of a force and moment test on tires manufactured in Example 1 and Comparative Example 1, FIG. 7 is a graph showing the results of evaluation of straight ahead ability, steering ability, and stability of the tires manufactured in Example 1 and Comparative Example 1, and FIG. 8 is a graph showing the relationship between the widths of hardness reinforcing rubber portions and rim flanges of the tires manufactured in Example 1 and Comparative Example 1. A description of the present invention will be given with reference to the accompanying drawings.

A pneumatic tire 100 of the present invention includes a bead portion 200 and a rim flange 300 provided outside the bead portion 200 wherein the rim flange is made of a rubber resistant to ozone and fatigue and a hardness reinforcing rubber portion 500 is interposed between the rim flange and the bead portion.

The rubber for the rim flange 300 may be a butadiene rubber that exhibits good resistance to chemicals and fatigue, as shown in Table 1. A blend of polybutadiene rubber (BR) and natural rubber (NR) is used to improve fatigue resistance.

Particularly, a chemically resistant layer is further formed as a coating layer on the surface of the dual rim flange to impart the tire with resistance to external ozone and chemicals and prevent the tire from aging. Any chemically resistant material may be used without particular limitation for the chemically resistant layer. Wax is used as a material for the chemically resistant layer.

The hardness of the hardness reinforcing rubber portion 500 is higher than that of the rim flange 300. The hardness reinforcing rubber portion 500 may be made of natural rubber. For hardness control, an increased amount of carbon can be used, as shown in Table 1.

**Table 1**

| | Rim flange | Hardness reinforcing rubber portion |
|---|---|---|
| Raw rubber (parts by weight) | NR/BR = 40/60 | NR = 100 |
| Carbon black (parts by weight) | 56 | 65 |
| Chemically resistant layer (attached to the outer surface, wax) | 2 | 0 |
| Hardness | 73 | 93 |

The ratio of the hardness of the rubber for the hardness reinforcing rubber portion 500 to the hardness of the rubber for the rim flange 300 is preferably 1.1 to 2. If the ratio is less than 1.1, the effect of improving the handling performance of the tire may be negligible. Meanwhile, if the ratio exceeds 2, the excessive hardness of the rubber for the hardness reinforcing rubber portion may lead to the formation of a lot of wave defects (rough surface defects) in an extrudate during extrusion and the excessive difference in hardness between the adjacent rubbers creates points at which stress concentration occurs under use conditions of the tire where repeated stress is applied, adversely affecting the durability of the tire.

The width L1 of the hardness reinforcing rubber portion 500 in contact with a body ply 600 surrounding the bead portion 200 is 5 to 150 mm at the end (peak) of an apex 210 of the bead portion. If the width is smaller than 5 mm, an increase in load may cause separation between semi-finished products. Meanwhile, if the width exceeds 150 mm, an increase in the speed of the vehicle may lead to poor high-speed durability of the tire, causing separation between semi-finished products.

The width L1 refers to the width of the hardness reinforcing rubber portion 500 in contact with the body ply 600. The width L2 refers to the width of the rim flange 300 in contact with the body ply 600. The L1 and L2 values are closely related to the handling stability of the vehicle. Thus, it is that the width L2 is 5 to 150 mm at the end of the hardness reinforcing rubber portion 500. If the width L2 is less than 5 mm, fatigue failure may occur between the adjacent rubbers because the hardness reinforcing rubber portion 500 and the rim flange 300 are in close proximity to each other, and as a result, the interface between the rubber layers is separated from each other, causing poor durability of the tire. Meanwhile, if the width L2 exceeds 150 mm, the hard rubber layer may come into contact with the tread where flexion and extension of the tire occur most frequently, resulting in its breakage.

The ratio of the distance RA to the end of the hardness reinforcing rubber portion 500 in contact with the body ply 600 to the distance RB to the end of the rim flange 300 in contact with the body ply 600 is preferably 0.75 to 4.4. If RA/RB is less than 0.75, the distance between the rim flange 300 and the hardness reinforcing rubber portion 500 becomes less than 5 mm, and as a result, interfacial separation between the rubbers may occur. Meanwhile, if RA/RB exceeds 4.4 the rim flange 300 may be connected with the tread where flexion and extension of the tire occur most frequently, resulting in its separation.

The distance RA to the end of the hardness reinforcing rubber portion 500 in contact with the body ply 600 is the distance from a toe ring to the end and refers to the distance from the lower outer corner of the bead portion to the end. Similarly, the distance RB to the end of the rim flange 300 in contact with the body ply 600 refers to the distance from the toe ring to the end.

The thicknesses of the hardness reinforcing rubber portion 500 and the rim flange 300 serve as important factors in determining the handling stability of the tire.

When the maximum thickness from the end (peak) of the apex 210 of the bead portion to the rim flange 300 is defined as "RLy" and the thickness of the hardness reinforcing rubber portion 500 on the path to RLy is defined as "DLy", DLy/RLy is 0.05 to 0.95.

If DLy/RLy is less than 0.05, the small thickness G/A of the hardness reinforcing rubber portion 500 does not contribute to improvement of handling performance. Meanwhile, if DLy/RLy exceeds 0.95, the hardness reinforcing rubber portion 500 may be exposed on the tire surface due to a processing deviation, and as a result, ozone cracks of the hardness reinforcing rubber portion 500 may occur, causing separation defects.

In FIG. 4, RK represents the distance to a point of 35 mm apart in a semicircle from the toe ring as the origin. That is, an imaginary line normal to the tire surface is drawn from a point corresponding to the maximum HHX value within a distance of 35 mm from the toe ring and the distances between points where the imaginary line meets the respective components are defined as "DLy" and "RLy".

Here, HHX means the maximum horizontal distance from the contact point with the toe ring to the outwardly protruding portion of the tire.

### Example 1 and Comparative Example 1

A 225/45R17 tire was manufactured using the rim flange rubber and the hardness reinforcing rubber shown in Table 1 (Example 1). A 225/45R17 tire was manufactured using only the rim flange rubber (Comparative Example 1). The two tires were evaluated through an indoor F/M test and with a vehicle (Hyundai Avante 1.6 MT) on a proving ground.

### Test Example 1: Force and moment test

Each of the 225/45R17 tires was mounted on a wheel (7.5J X 17) and evaluated by a force and moment test. An air pressure of 33 PSI was applied during the test. The test evaluation was conducted using MTS Flat-Trac.

Referring to FIG. 6, the CC1 value of the inventive tire was improved by ~10% compared to that of the comparative tire.

When a tire rotates at a slip angle during driving of a vehicle, the centripetal force opposing the centrifugal force interacts and is in equilibrium with the cornering force and the cornering drag. "CC1" is a value obtained by dividing the cornering force at a slip angle of 1° in the equilibrium state by the load acting on the tire. CC1 is one of the main factors in evaluating the handling of the tire. Particularly, the cornering force at a slip angle of 1° is mainly used as a characteristic value for the handling performance of the tire. However, since these values vary depending on the load conditions applied to tire, the performance of the tire is evaluated by the value divided by the load.

### Experimental Example 2: Evaluation of handling performance

Each of the 225/45R17 tires was mounted on a vehicle (Avante 1.6 MT) and evaluated by a sensory test. The results are graphically shown in FIG. 7.

The scores on the vertical axis represent the sensory evaluation grades. The higher the evaluation grade, the better the performance.

Referring to the graph, the inventive tire was found to be excellent in straight ahead ability, steering ability, and stability even under severe handling conditions compared to the comparative tire.

### Experimental Example 3: Relationship between widths of the hardness reinforcing rubber portion and the rim flange

Each of the 225/45R17 tires was mounted on a wheel (7.5J X 17) and evaluated by a force and moment test. An air pressure of 33 PSI was applied during the test. The test evaluation was conducted using MTS Flat-Trac.

Referring to FIG. 8, when DLy/RLy was less than 5% based on the CC1 value representing handling performance, the CC1 value of the inventive tire was improved by only ~3% compared to that of the comparative tire. The insignificant improvement in the performance of the tire for its actual equipment investment cost limits its practical application. Thus, it is determined that only when DLy/RLy is at least 5% is the handling performance substantially improved. In addition, when DLy/RLy was 40%, the CC1 value of the inventive tire was ~10% higher than that of the comparative tire. The CC1 value is a compatibility index for handling performance.

Specifically, prototypes with DLy/RLy values of 5%, 20%, and 40% based on the CC1 value at the level of 0% were manufactured and evaluated. The test results are indicated by triangles in FIG. 8. The comparative tire is currently generally used. DLy/RLy of the comparative tire was at the level of 0 and the CC1 value thereof was at the level of 0.339, as evaluated by a force and moment test. Meanwhile, the CC1 value of the inventive tire whose DLy/RLy was 5% was 0.347, which is ~3% higher than that of the comparative tire and the CC1 value of the inventive tire whose DLy/RLy was 40% was 0.378, which is ~11% higher than that of the comparative tire, demonstrating improved handling performance of the inventive tire.

(The graph of FIG. 8 shows the correlation between the DLy/RLy and CC1 values determined using a linear regression method from the test results, which was derived at a confidence level of 98%. It was determined that the relationship is represented by Y = 0.09041X + 0.3402).

### <Explanation of reference numerals>

Pneumatic tire 100, Bead portion 200, Rim flange 300, Hardness reinforcing rubber portion 500.

### Industrial Applicability

The pneumatic tire of the present invention has improved handling stability and straight ahead ability while avoiding a change in the physical properties of the flange rubber, ozone cracks caused by ozone present in the air, and fatigue cracks caused by frequent flexion and extension. Therefore, the present invention is considered highly industrially applicable.

## Claims

1. A pneumatic tire (100) comprising a bead portion (200) and a rim flange (300) provided outside the bead portion (200),
wherein the rim flange (300) is made of a blend of polybutadiene rubber and natural rubber,
**characterized in that**
the rim flange (300) is made of rubber resistant to ozone and fatigue;
wherein the rim flange (300) is surface-coated with wax;
wherein a hardness reinforcing rubber portion (500) is interposed between the rim flange (300) and the bead portion (200), and the hardness of the hardness reinforcement rubber portion (500) is higher than that of the rim flange (300);
wherein the width (L1) where the hardness reinforcement rubber portion (500) contacts the body ply (600) wrapping the bead portion (200) is between 5 mm and 150 mm from the apex end of the bead portion (200);
wherein the width (L2) where the rim flange (300) contacts the body ply (600) is between 5 mm and 150 mm from the end of the hardness reinforcement rubber portion (500); and
wherein DLy/RLy is between 0.05 and 0.9,
DLy is the maximum thickness of the hardness reinforcement rubber portion (500) along the path from the apex end of the bead portion (200) to the rim flange (300) and RLy is the maximum thickness of the rim flange portion.

## Patentansprüche

1. Luftreifen (100) umfassend einen Wulstbereich (200) und einen außerhalb des Wulstbereichs (200) angeordneten Felgenflansch (300),
wobei der Felgenflansch (300) aus einer Mischung aus Polybutadienkautschuk und Naturkautschuk besteht,
**dadurch gekennzeichnet, dass**
der Felgenflansch (300) aus ozon- und ermüdungsbeständigem Kautschuk besteht;
wobei der Felgenflansch (300) mit Wachs oberflächenbeschichtet ist;
wobei ein härtungsverstärkender Kautschukbereich (500) zwischen dem Felgenflansch (300) und dem Wulstbereich (200) angeordnet ist und die Härte des härtungsverstärkenden Kautschukbereichs (500) höher ist als die des Felgenflansches (300);
wobei die Breite (L1), bei der der härtungsverstärkende Kautschukbereich (500) mit der den Wulstbereich (200) umhüllenden Körperlage (600) in Kontakt kommt, zwischen 5 mm und 150 mm vom Scheitelende des Wulstbereichs (200) beträgt;
wobei die Breite (L2), bei der der Felgenflansch (300) mit der Körperlage (600) in Kontakt kommt, zwischen 5 mm und 150 mm vom Ende des härtungsverstärkenden Kautschukbereichs (500) beträgt; und
wobei DLy/RLy zwischen 0,05 und 0,9 ist, DLy die maximale Dicke des härtungsverstärkenden Kautschukbereichs (500) entlang des Weges vom Scheitelende des Wulstbereichs (200) zum Felgenflansch (300) ist und RLy die maximale Dicke des Felgenflanschteils ist.

## Revendications

1. Pneumatique (100) pour véhicule à roues comprenant une partie talon (200) et une jante (300) prévue à l'extérieur de la partie talon (200),
dans lequel la jante (300) est constituée d'un mélange de caoutchouc polybutadiène et de caoutchouc naturel,
**caractérisé en ce que**
la jante (300) est constituée de caoutchouc résistant à l'ozone et à la fatigue ;
dans lequel la jante (300) est recouverte en surface de cire ;
dans lequel une partie en caoutchouc renforçant la dureté (500) est intercalée entre la jante (300) et la partie talon (200), et la dureté de la partie en caoutchouc renforçant la dureté (500) est supérieure à celle de la jante (300) ;
dans lequel la largeur (L1) à laquelle la partie en caoutchouc renforçant la dureté (500) entre en contact avec la nappe de corps (600) enveloppant la partie talon (200) est comprise entre 5 mm et 150 mm à partir de l'extrémité supérieure de la partie talon (200);
dans lequel la largeur (L2) à laquelle la jante (300) entre en contact avec la nappe de corps (600) est comprise entre 5 mm et 150 mm à partir de l'extrémité de la partie en caoutchouc de renforcement de dureté (500) ; et
dans lequel DLy/RLy est comprise entre 0,05 et 0,9,
DLy est l'épaisseur maximale de la partie en caoutchouc de renforcement de dureté (500) le long du trajet allant de l'extrémité supérieure de la partie talon (200) à la jante (300) et RLy est l'épaisseur maximale de la partie de jante.
